# FASCICULE DE BREVET EUROPEEN

(11) **EP 3 476 095 B1**
(45) Date de publication et mention de la délivrance du brevet: **06.03.2024**
(21) Numéro de dépôt: 17737323.0
(22) Date de dépôt: 16.06.2017
(51) Int. Cl.: H04L 69/164, H04L 69/14, H04L 45/24

(54) **PROCÉDÉ DE COMMUNICATION UDP VIA DES CHEMINS MULTIPLES ENTRE DEUX TERMINAUX**
VERFAHREN FÜR MEHRWEG-UDP-KOMMUNIKATIONSVERFAHREN ZWISCHEN ZWEI ENDGERÄTEN
METHOD FOR MULTI-PATH UDP COMMUNICATION METHOD BETWEEN TWO TERMINALS

(30) Priorité: 24.06.2016 FR 1655910
(43) Date de publication de la demande: 01.05.2019
(73) Titulaire: Orange, 92130 Issy-les-Moulineaux (FR)
(72) Inventeur: BOUCADAIR, Mohamed, 35830 Betton (FR); JACQUENET, Christian, 35131 Pont-Pean (FR)
(86) Numéro de dépôt international: PCT/FR2017/051569
(87) Numéro de publication internationale: WO 2017/220892

(56) Documents cités:
- US-A1- 2006 274 899
- US-A1- 2013 077 501
- US-A1- 2016 094 467
- LEI W ZHANG S LIU NORTHEASTERN UNIVERSITY W: "A Framework of Multipath Transport System Based on Application-Level Relay (MPTS-AR); draft-leiwm-tsvwg-mpts-ar-05.txt", A FRAMEWORK OF MULTIPATH TRANSPORT SYSTEM BASED ON APPLICATION-LEVEL RELAY (MPTS-AR); DRAFT-LEIWM-TSVWG-MPTS-AR-05.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERL, 19 janvier 2016 (2016-01-19), pages 1-55, XP015110742,

## Description

La présente invention concerne le domaine des télécommunications, et notamment les réseaux de communications aptes à mettre en oeuvre le protocole IP (Internet Protocol). Plus particulièrement, la présente invention concerne la fourniture de services dans les réseaux IP « à valeur ajoutée », c'est-à-dire les réseaux capables d'effectuer des traitements différenciés selon la nature du trafic acheminé dans le réseau.

L'invention s'applique en particulier à tout type de dispositif-client (« *User Equipment* » en anglais) tel qu'un terminal fixe ou mobile, « TV connectée », ou une passerelle résidentielle (c'est-à-dire une passerelle domestique ou située dans une entreprise), ou une passerelle d'opérateur réseau (« *Gateway* » en anglais), ou encore un décodeur TV (« *Set-Top Box* », ou STB en anglais). Par souci de concision, un dispositif-client de n'importe quel type sera souvent appelé « terminal » ci-après.

Les terminaux, tels que les téléphones intelligents (« *smartphone* » en anglais) et les ordinateurs personnels (« *Personal Computer* », ou PC en anglais) sont désormais capables d'activer et d'exploiter plusieurs interfaces logiques liées à une ou plusieurs interfaces physiques. De tels terminaux sont dits « multi-interfaces » (« *Multi-Interface* », ou MIF en anglais). Lorsqu'un terminal dispose de plusieurs interfaces capables de le raccorder à différents réseaux d'accès (par exemple : fixe, mobile, ou WLAN), il bénéficie alors d'un accès dit « hybride », parce qu'il combine différentes technologies de réseaux d'accès.

Plusieurs adresses IP peuvent alors être attribuées à un terminal MIF. Ces adresses sont utilisées lorsqu'il se connecte à différents types de réseaux tels qu'un réseau fixe, un réseau mobile ou un réseau WLAN (initiales des mots anglais « *Wireless Local Area Network* » signifiant « Réseau Local Sans-Fil », dont les réseaux Wi-Fi sont un exemple emblématique), de manière simultanée ou différée. Ces adresses IP peuvent :
- appartenir à la même famille d'adresses ou à des familles d'adresses distinctes (IPv4, IPv6 ou les deux),
- avoir des durées de vie différentes,
- avoir des portées différentes, par exemple adresse IPv4 privée, adresse IPv6 unique de portée locale (*Unique Local Address*, ou ULA en anglais), ou adresse IPv6 de portée globale (*Global Unicast Address*, ou GUA en anglais), et
- être affectées à la même interface réseau logique ou à différentes interfaces réseau logiques.

On notera toutefois que la caractéristique « MIF » est volatile, car la capacité d'utiliser plusieurs interfaces dépend des conditions de raccordement au(x) réseau(x), de la localisation du dispositif, ou d'autres facteurs. Un dispositif peut devenir MIF en cours d'établissement d'une communication simple (c'est-à-dire, une communication établie le long d'un chemin unique avec un correspondant donné), ou même après l'établissement d'une communication simple. On notera également qu'un dispositif ne sait pas a priori s'il lui est possible d'utiliser plusieurs chemins distincts pour établir une communication avec un correspondant donné ; plus précisément, le dispositif n'acquiert cette information (le cas échéant) qu'à l'issue d'une phase au cours de laquelle il tente d'établir une communication utilisant des chemins multiples avec le correspondant.

On rappelle qu'une « communication à chemins multiples » est une communication établie entre deux dispositifs empruntant simultanément un ou plusieurs chemins entre ces deux dispositifs. L'établissement et le maintien en activité d'une telle communication reposent sur l'utilisation d'un protocole dédié, tel que MPTCP (Multi-Path TCP), qui peut éventuellement être défini comme une extension d'un protocole de transport défini antérieurement, tel que TCP (initiales des mots anglais « *Transmission Control Protocol* » signifiant « Protocole de Contrôle de Transmission »). Autrement dit, une communication à chemins multiples est un agrégat d'une ou plusieurs communications simples empruntant un même chemin ou des chemins différents (partiellement ou complètement disjoints).

On rappelle également que, dans le domaine des réseaux, on appelle « agrégation de liens » le regroupement de plusieurs liens associés à autant d'interfaces (logiques) comme s'il s'agissait d'un seul lien associé à une seule interface, notamment dans le but d'accroître le débit au-delà des limites d'un seul lien, mais également d'appliquer les mêmes procédures d'exploitation à l'ensemble des liens ainsi agrégés (notion de « *fate sharing* » en anglais). En particulier, les offres de services concernant un terminal disposant d'un accès hybride reposent sur l'introduction dans le réseau de fonctions permettant d'agréger l'ensemble des communications réseau d'un terminal (par exemple : WLAN et 3G, ou ADSL, WLAN et 4G).

L'agrégation de liens permet aussi de faire en sorte que d'autres interfaces prennent le relais si un lien réseau tombe en panne (principe de redondance). L'agrégation de liens s'applique à tout type de trafic acheminé le long de ces liens, y compris du trafic IP.

L'agrégation de liens peut également être utilisée pour répartir le trafic sur plusieurs liens. Dans ce cas, la répartition de trafic entre des liens qui font l'objet d'un agrégat dépend de divers paramètres ; la répartition de trafic peut ainsi dépendre de la politique d'ingénierie de trafic (par exemple privilégier l'acheminement d'un trafic particulier sur un lien dont les caractéristiques en termes de robustesse ou de disponibilité sont compatibles avec la nature dudit trafic), ou de la politique de Qualité de Service (« *Quality of Service* », ou QoS en anglais) qui peut par exemple privilégier certains liens dans un contexte de priorisation de trafic.

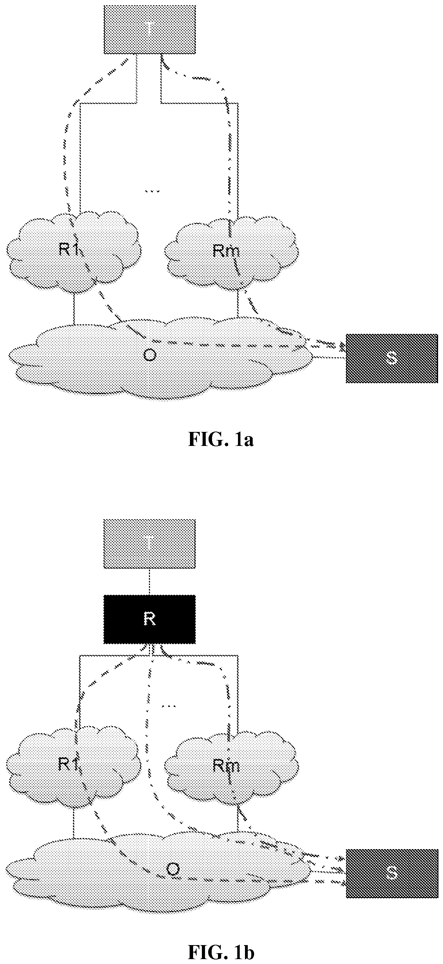

A titre d'exemple, on a représenté sur la **figure 1a** un terminal T qui communique avec un serveur S via plusieurs réseaux IP notés R1, ..., Rm et O, en mettant en oeuvre un protocole de communication à chemins multiples. La nature des différents réseaux d'accès R1, ..., Rm peut être filaire, sans-fil, ou autre. Par ailleurs, le terminal T peut avoir la capacité de se connecter à différents réseaux d'accès de manière simultanée ou non.

De même, on a représenté sur la **figure 1b** un terminal T placé derrière un équipement, dit dispositif-relais R ; ce dispositif-relais R communique avec un serveur S via plusieurs réseaux IP notés R1, ..., Rm et O, en mettant en oeuvre un protocole de communication à chemins multiples.

De manière générale, on appellera « dispositif-relais » un équipement localisé dans le réseau et agissant au nom d'un ou de plusieurs dispositif-clients, tels qu'un terminal ou une passerelle. Cette configuration permet au dispositif-client de bénéficier d'un usage optimisé des ressources réseau disponibles, et également d'établir des communications à chemins multiples dans un délai réduit.

On notera que l'agrégation de liens ne fait aucune hypothèse quant à la configuration de la machine distante. Ainsi, une machine source peut solliciter une fonction d'agrégation de liens sans que la machine distante n'utilise une telle fonction.

Divers modes d'agrégation peuvent être envisagés, parmi lesquels les trois modes suivants :
- mode de repli (« *backup* » en anglais) : ce mode consiste à utiliser des chemins secondaires en cas d'indisponibilité des chemins primaires, et ce, afin d'améliorer la disponibilité réseau et, partant, la robustesse et la fiabilité des communications IP établies sur les différents liens ;
- mode associatif (« *bonding* » en anglais) : ce mode consiste à utiliser les ressources associées à tout ou partie des chemins disponibles, les flux IP associés à une même application pouvant être répartis entre plusieurs chemins ; le choix d'exploiter l'intégralité des chemins, ou seulement une partie d'entre eux, peut par exemple être conditionné par la nature du trafic ou les caractéristiques de disponibilité ou de fiabilité associées à chaque chemin, lesquelles peuvent varier fortement d'un chemin à l'autre ; tous les chemins sélectionnés pour ce mode associatif sont considérés comme étant des chemins primaires ; et
- mode dit de « confort » : ce mode est similaire au mode associatif, si ce n'est que les flux d'une application donnée ne sont pas répartis entre plusieurs chemins, mais sont envoyés sur un seul chemin.

On notera que ces modes ne sont pas mutuellement exclusifs, et ne sont pas spécifiques à un type particulier de trafic. Ainsi, ils peuvent être mis en place indépendamment de la nature du trafic qui sera acheminé le long des chemins agrégés selon l'un ou l'autre des différents modes.

Les protocoles de transport majoritairement utilisés par les applications logicielles pour communiquer sur Internet sont TCP (mentionné ci-dessus) et UDP (initiales des mots anglais « *User Datagram Protocol* » signifiant « Protocole de Datagramme Utilisateur »). A ce titre, les moyens techniques permettant à un dispositif-client/dispositif-relais d'optimiser l'usage des ressources réseaux disponibles en fonction des besoins et des contraintes des applications reposant sur TCP ou UDP sont de nature à apporter une amélioration significative du niveau de qualité associé à l'utilisation de telles applications. De plus, certains acteurs de l'Internet sont en train d'expérimenter à grande échelle des solutions alternatives à TCP qui reposent sur UDP (et, plus précisément, sur un schéma d'encapsulation). De ce point de vue, les fournisseurs de service et opérateurs de réseaux IP ont à coeur de fournir un niveau de qualité d'utilisation comparable entre des applications reposant sur TCP et celles reposant sur UDP.

Il est donc souhaitable de disposer d'une parité fonctionnelle aussi large que possible entre TCP et UDP. En particulier, il serait utile de pouvoir établir des communications UDP *via* des chemins multiples de manière fonctionnellement comparable aux solutions techniques connues, telles que le protocole MPTCP mentionné ci-dessus, qui permettent l'établissement de connexions TCP *via* des chemins multiples.

Dans le cadre de la présente invention, on appelle « datagramme UDP » un paquet IP transporté selon le protocole UDP.

Une solution à ce problème a été proposée dans le document (« draft-Internet ») de M. Boucadair et al. soumis à l'IETF (Internet Engineering Task Force) et intitulé « An MPTCP Option for Network-Assisted MPTCP Deployments: Plain Transport Mode ». Cette solution utilise le protocole MPTCP pour acheminer en particulier du trafic UDP dans le contexte d'une connexion MPTCP. Dans le cas du trafic UDP, la solution consiste à transformer des datagrammes UDP en des paquets TCP. A cet effet, les auteurs ont défini une option TCP spécifique, qui permet d'indiquer explicitement la nature des données transportées au sein de la connexion MPTCP, et notamment d'indiquer explicitement que les données acheminées sont des datagrammes UDP. Ainsi, une fonction mandataire (*proxy*) MPTCP transforme un datagramme UDP en un paquet TCP en procédant comme suit :
- remplacement de l'en-tête UDP par un en-tête TCP, et
- insertion d'une option TCP dont le champ « Protocol » est valorisé à « 17 », ce qui indique que le contenu du paquet TCP correspond à des données UDP.

Suite à la réception d'un paquet TCP qui contient ladite option TCP, la fonction mandataire MPTCP procède comme suit :
- remplacement de l'en-tête TCP par un en-tête UDP, et
- transfert du datagramme UDP ainsi construit vers le prochain saut.
Cette solution permet avantageusement d'utiliser les mêmes fonctions pour établir des communications à chemins multiples à la fois pour le trafic TCP et pour le trafic UDP.

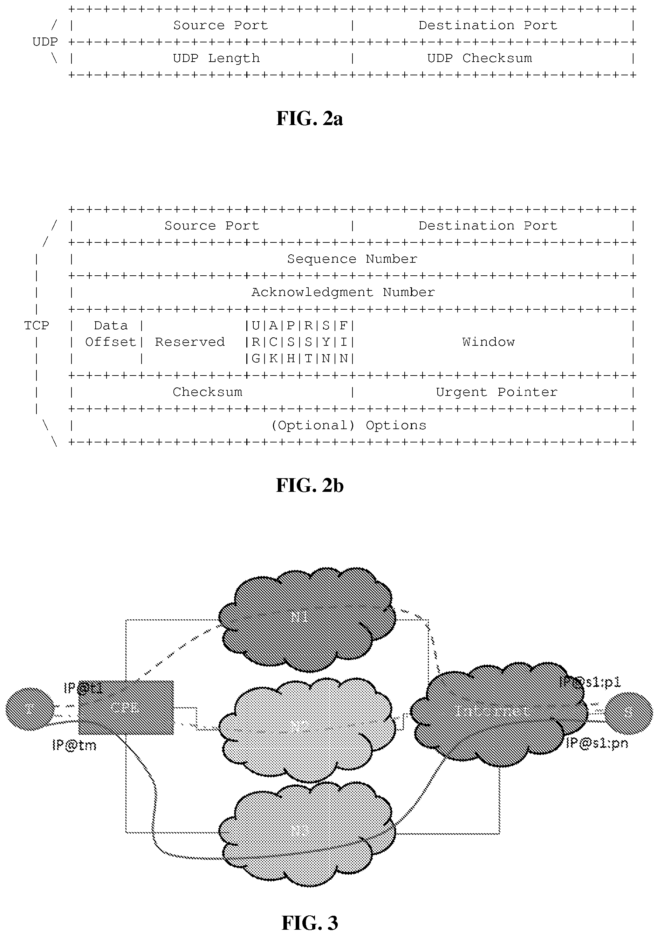

L'inconvénient de cette solution est qu'elle offre des performances dégradées en raison de la différence de taille entre l'en-tête TCP (20 octets sans compter les options, cf. **figure 2a**) et l'en-tête UDP (8 octets, cf. **figure 2b**). En particulier, cette différence de taille peut provoquer la fragmentation des datagrammes UDP. Cette fragmentation oblige les opérateurs réseau à modifier certains paramètres tels que la valeur de la MTU (initiales des mots anglais « *Maximum Transfer Unit*»), qui correspond à la taille maximale des paquets pouvant être transmis sur un lien donné : si la taille d'un paquet excède la valeur de la MTU, alors la source émettrice du paquet est informée de cet excès et est invitée à fragmenter ledit paquet de taille supérieure à la valeur MTU. Or la modification de tels paramètres n'est pas toujours possible dans certains contextes, par exemple en raison de limitations technologiques. De plus, le transport fiable de données caractéristique du protocole TCP peut induire une dégradation de service pour des applications UDP.

Le document US 2016/0094467 décrit une approche dans un contexte de connexions multiples (« multi-homing ») s'appuyant sur des protocoles de tunnellisation (« tunnelling protocols »).

Le document de W. Lei et al, intitulé « A Framework of Multipath Transport System Based on Application-Level Relay (MPTS-AR) draft-leiwm-tsvwg-mpts-ar-05 »,19 juillet 2016, définit un système de communication dans lequel des relais au niveau applicatif sont déployés pour fournir les conditions nécessaires à l'établissement de chemins multiples entre une source et une destination. La présente invention concerne donc un procédé de communication dans un réseau IP, comprenant les étapes suivantes :
a) un premier dispositif communicant initialise une communication avec un second dispositif communicant, en signalant audit second dispositif communicant que ledit premier dispositif communicant est compatible avec les communications à chemins multiples reposant sur le protocole de transport UDP (User Datagram Protocol), et
b) si le second dispositif communicant est lui aussi compatible avec les communications UDP à chemins multiples :
   - le premier dispositif communicant envoie des données au second dispositif selon le protocole de transport UDP, en incluant dans les messages contenant ces données, quel que soit le chemin utilisé, un même identifiant, dit identifiant de contexte, permettant au second dispositif communicant de corréler l'ensemble des datagrammes UDP associés à une même communication UDP à chemins multiples, et/ou
   - le second dispositif communicant envoie des données au premier dispositif selon le protocole de transport UDP, en incluant dans les messages contenant ces données, quel que soit le chemin utilisé, un même identifiant, dit identifiant de contexte, permettant au premier dispositif communicant de corréler l'ensemble des datagrammes UDP associés à une même communication UDP à chemins multiples.

En effet, les auteurs de la présente invention ont réalisé que les datagrammes UDP envoyés par un dispositif communicant émetteur à un dispositif communicant récepteur, en utilisant différentes adresses IP source ou différents numéros de port source, doivent être identifiés de manière adéquate si l'on veut permettre au dispositif communicant récepteur de corréler l'ensemble des datagrammes UDP associés à une même communication à chemins multiples. Une telle identification permet en effet de préserver l'intégrité de l'échange des données entre les deux dispositifs. Selon la présente invention, le dispositif communicant émetteur insère dans les datagrammes UDP qu'il émet un identifiant de contexte, que l'on appellera « Context_ID » ; une telle communication UDP à chemins multiples sera appelée « MPUDP ».

On notera que, contrairement aux solutions existantes qui reposent sur l'exploitation de champs spécifiques d'un en-tête d'encapsulation (par exemple, IP-in-IP, ou GRE), ou des solutions spécifiques au protocole TCP (par exemple, MPTCP), ou encore des solutions qui transportent des données UDP dans un paquet TCP (telle que la solution de Boucadair *et al.* décrite succinctement ci-dessus), la présente invention repose sur l'acheminement natif de datagrammes UDP.

Grâce à ces dispositions, on obtient une parité fonctionnelle entre TCP et UDP pour la gestion de chemins multiples, en établissant des sessions UDP *via* des chemins multiples de façon comparable à l'établissement de connexions TCP *via* des chemins multiples, afin de traiter avec la même efficacité l'ensemble du trafic acheminé sur Internet et reposant indifféremment sur le protocole TCP ou sur le protocole UDP.

De plus, avantageusement, l'invention :
- n'impose aucune modification aux applications logicielles reposant sur UDP ;
- permet, pour bénéficier des avantages de l'agrégation de liens, d'éviter l'utilisation de tunnels (comme dans les technologies « GTP bonding » ou « GRE bonding » par exemple), dont l'ingénierie, l'établissement et la maintenance sont sources de complication et de nature à pénaliser le niveau de qualité associé aux communications reposant sur de tels tunnels ;
- permet d'optimiser l'utilisation des ressources réseaux disponibles sans aucun coût protocolaire, et sans rupture protocolaire consistant par exemple à transformer des datagrammes UDP en des paquets transportés au moyen d'autres protocoles de transport (par exemple, TCP) ; et
- permet de déployer une seule solution pour toutes les applications logicielles transportées au moyen du protocole UDP, contrairement aux solutions qui nécessitent l'intégration de la logique d'agrégation dans l'application elle-même.

On améliore ainsi significativement la qualité d'expérience utilisateur.

Un exemple typique d'application de l'invention est le transfert de fichiers utilisant les ressources du protocole TFTP (Trivial File Transfer Protocol), ou encore la gestion optimisée de flux de collecte de statistiques reposant sur le protocole SNMP (initiales des mots anglais « *Simple Network Management Protocol* »), qui utilise les ports UDP 161 et 162. Un terminal disposant de plusieurs attachements réseau agissant en tant que client TFTP pourra dynamiquement exploiter l'ensemble des chemins disponibles qui lui permettent d'accéder au serveur TFTP. Le temps de transfert des données sera ainsi amélioré au profit d'une expérience client optimisée. Dans le cas du trafic SNMP, l'invention permet en particulier de fiabiliser l'acheminement du trafic en permettant d'utiliser un chemin de repli en cas d'indisponibilité du chemin primaire.

On notera que les dispositifs communicants impliqués dans une communication selon l'invention peuvent être n'importe quels dispositifs compatibles avec le protocole IP. Un tel dispositif communicant peut être de type quelconque, par exemple un dispositif-client ou un serveur de contenu accessible sur l'Internet. Il peut disposer d'une ou plusieurs adresses IP affectées à chacune de ses interfaces physiques ou logiques. Il peut aussi ne disposer que d'une seule interface, auquel cas on supposera qu'il est situé derrière un dispositif-relais (tel qu'un routeur ou une passerelle résidentielle) connecté à un ou plusieurs réseaux et compatible avec un mécanisme d'agrégation de liens.

Selon des caractéristiques particulières, ledit premier dispositif communicant et/ou ledit second dispositif communicant insère en outre dans lesdits messages un jeton de sécurité permettant au récepteur de ces messages d'en authentifier l'émetteur.

Grâce à ces dispositions, on peut éviter, par exemple, qu'un terminal tiers insère des données dans un message à destination d'un terminal T1 ou d'un terminal T2, alors qu'il ne fait pas légitimement partie d'un échange en cours entre le terminal T1 et le terminal T2.

Selon d'autres caractéristiques particulières, ledit premier dispositif communicant et/ou ledit second dispositif communicant insère en outre dans lesdits messages une information permettant au récepteur de ces messages de les traiter dans leur ordre d'émission.

Grâce à ces dispositions, on corrige un éventuel décalage entre l'ordre d'émission et l'ordre d'arrivée des datagrammes UDP, décalage qui peut être provoqué notamment par une distorsion du niveau de qualité relatif aux différents chemins utilisés.

Selon encore d'autres caractéristiques particulières, ledit premier dispositif communicant et/ou ledit second dispositif communicant étant un concentrateur de trafic, ledit procédé comprend en outre les étapes suivantes :
- ledit concentrateur de trafic reçoit un datagramme UDP acheminé sur un chemin utilisé par une communication UDP à chemins multiples, et
- le concentrateur de trafic envoie ce datagramme UDP à son destinataire selon le mode de transport UDP simple.

Inversement, selon encore d'autres caractéristiques particulières, ledit premier dispositif communicant et/ou ledit second dispositif communicant étant un concentrateur de trafic apte à répartir les datagrammes UDP reçus selon le mode de transport UDP simple et associés à une certaine session, entre différents chemins d'une communication UDP à chemins multiples permettant d'atteindre le destinataire de ces datagrammes UDP, ledit procédé comprend en outre les étapes suivantes :
- suite à la réception d'un datagramme UDP, le concentrateur de trafic consulte une table d'enregistrement qui liste l'ensemble des adresses et/ou numéros de port du destinataire du datagramme UDP reçu,
- le concentrateur de trafic alloue un identifiant de contexte si aucun paquet n'a déjà été traité pour cette session ou réutilise un identifiant de contexte déjà alloué pour cette session, et
- le concentrateur de trafic achemine le datagramme UDP vers l'adresse IP et/ou le numéro de port dudit destinataire associés au chemin choisi pour acheminer ce datagramme UDP.

Grâce à ces dispositions, les opérateurs réseau peuvent permettre à leurs clients de bénéficier des avantages de la présente invention sans requérir que les dispositifs communicants de ces clients (y compris serveurs distants et applications) soient nécessairement capables d'établir une communication UDP à chemins multiples.

Corrélativement, l'invention concerne un dispositif communicant. Ledit dispositif communicant, dit premier dispositif communicant, est remarquable en ce qu'il comprend des moyens pour :
- initialiser une communication avec un autre dispositif communicant, dit second dispositif communicant, au sein d'un réseau IP, en signalant audit second dispositif communicant que ledit premier dispositif communicant est compatible avec les communications UDP (User Datagram Protocol) à chemins multiples,
- envoyer des données selon le protocole UDP au second dispositif communicant, en incluant dans les messages contenant ces données, quel que soit le chemin utilisé, un même identifiant, dit identifiant de contexte, permettant au second dispositif communicant de corréler l'ensemble des datagrammes UDP associés à une même communication UDP à chemins multiples, et
- recevoir des données selon le protocole UDP de la part du second dispositif communicant, en détectant dans les messages contenant ces données, quel que soit le chemin utilisé, un même identifiant, dit identifiant de contexte, permettant au premier dispositif communicant de corréler l'ensemble des datagrammes UDP associés à une même communication UDP à chemins multiples.

Selon des caractéristiques particulières, ledit dispositif communicant comprend en outre des moyens pour insérer dans les messages qu'il émet un jeton de sécurité permettant au récepteur de ces messages d'en authentifier l'émetteur.

Selon d'autres caractéristiques particulières, ledit dispositif communicant comprend en outre des moyens pour insérer dans les messages qu'il émet une information permettant au récepteur de ces messages de les traiter dans leur ordre d'émission.

Selon encore d'autres caractéristiques particulières, ledit dispositif communicant comprend un concentrateur de trafic ayant des moyens pour, lorsqu'il reçoit un datagramme UDP acheminé sur un chemin utilisé par une communication UDP à chemins multiples, envoyer ce datagramme UDP à son destinataire selon le mode de transport UDP simple.

Selon encore d'autres caractéristiques particulières, ledit dispositif communicant comprend un concentrateur de trafic ayant des moyens pour répartir des datagrammes UDP reçus selon le mode de transport UDP simple et associés à une certaine session, entre différents chemins d'une communication UDP à chemins multiples permettant d'atteindre le destinataire de ces datagrammes UDP, ainsi que des moyens pour, site à la réception d'un datagramme UDP :
- consulter une table d'enregistrement qui liste l'ensemble des adresses et/ou numéros de port du destinataire du datagramme UDP reçu,
- allouer un identifiant de contexte si aucun paquet n'a déjà été traité pour cette session ou réutiliser un identifiant de contexte déjà alloué pour cette session, et
- acheminer le datagramme UDP vers l'adresse IP et/ou le numéro de port dudit destinataire associés au chemin choisi pour acheminer ce datagramme UDP.

Les avantages offerts par ces dispositifs communicants sont essentiellement les mêmes que ceux offerts par les procédés de communication succinctement exposés ci-dessus.

On notera qu'il est possible de réaliser ces dispositifs communicants dans le contexte d'instructions logicielles et/ou dans le contexte de circuits électroniques.

L'invention vise également un programme d'ordinateur téléchargeable depuis un réseau de communications et/ou stocké sur un support lisible par ordinateur et/ou exécutable par un microprocesseur. Ce programme d'ordinateur est remarquable en ce qu'il comprend des instructions pour l'exécution des étapes d'un des procédés de communication succinctement exposés ci-dessus, lorsqu'il est exécuté sur un ordinateur.

Les avantages offerts par ce programme d'ordinateur, sont essentiellement les mêmes que ceux offerts par les procédés de communication succinctement exposés ci-dessus.

D'autres aspects et avantages de l'invention apparaîtront à la lecture de la description détaillée ci-dessous de modes de réalisation particuliers, donnés à titre d'exemples non limitatifs. La description se réfère aux figures qui l'accompagnent, dans lesquelles :
- la figure 1a, mentionnée ci-dessus, représente un terminal T communicant avec un serveur S via plusieurs réseaux IP en mettant en oeuvre un protocole de communication à chemins multiples,
- la figure 1b, mentionnée ci-dessus, représente un terminal T placé derrière un dispositif-relais R communicant avec un serveur S via plusieurs réseaux IP en mettant en oeuvre un protocole de communication à chemins multiples,
- la figure 2a, mentionnée ci-dessus, représente l'en-tête UDP,
- la figure 2b, mentionnée ci-dessus, représente l'en-tête TCP,
- la figure 3 représente un terminal T compatible avec les communications à chemins multiples connecté à un serveur S lui aussi compatible avec les communications à chemins multiples,
- la figure 4 illustre une communication MPUDP entre un terminal T et un serveur S utilisant un identifiant de contexte selon l'invention,
- la figure 5 illustre une communication MPUDP entre un terminal T1 et un terminal T2 utilisant un identifiant de contexte et un jeton de sécurité selon l'invention,
- la figure 6 représente un exemple de datagramme UDP contenant des données utiles, ainsi qu'un identifiant de contexte et des données supplémentaires selon l'invention,
- les figures 7a, 7b et 7c illustrent divers types d'architectures associées à des concentrateurs de trafic,
- la figure 8 représente un terminal T compatible avec MPUDP, qui échange des messages avec un serveur S compatible avec UDP, via *N* concentrateurs de trafic (*P*₁, *P*₂, ... , *P_{N}*) situés dans m réseaux d'accès R1, ..., Rm, et via un réseau O,
- la figure 9 illustre les échanges entre une passerelle résidentielle CPE et un concentrateur C, selon une première variante d'un mode de réalisation de l'invention,
- la figure 10 illustre les échanges entre une plateforme de médiation et un concentrateur C, selon une deuxième variante dudit mode de réalisation de l'invention,
- la figure 11 représente un terminal T, compatible avec MPUDP, échangeant des messages avec un serveur S compatible avec UDP, via un concentrateur C et trois réseaux N1, N2 et N3, ainsi que, optionnellement, via une passerelle résidentielle CPE, selon un premier exemple dudit mode de réalisation de l'invention,
- la figure 12a représente un terminal T, compatible avec MPUDP, répartissant le trafic UDP entre plusieurs chemins permettant d'atteindre un concentrateur C, selon un deuxième exemple dudit mode de réalisation de l'invention,
- la figure 12b représente un concentrateur C répartissant le trafic UDP entre plusieurs chemins permettant d'atteindre un terminal T compatible avec MPUDP, selon un troisième exemple dudit mode de réalisation de l'invention,
- les figures 13a et 13b représentent un terminal T placé derrière une passerelle résidentielle CPE compatible avec MPUDP et échangeant des datagrammes UDP avec un serveur S non-compatible avec MPUDP, *via* la passerelle résidentielle CPE et un concentrateur C, selon un quatrième exemple dudit mode de réalisation de l'invention,
- les figures 14a et 14b représentent un terminal T placé derrière une passerelle résidentielle CPE compatible avec MPUDP et échangeant des datagrammes UDP avec deux terminaux S1 et S2 non-compatibles avec MPUDP, *via* la passerelle résidentielle CPE et un concentrateur C, selon un cinquième exemple dudit mode de réalisation de l'invention, et
- la figure 15 représente un datagramme UDP utilisé pour transmettre l'ensemble des données reçues au sein de plusieurs datagrammes UDP classiques.

On rappelle pour commencer qu'une communication UDP simple est identifiée par l'ensemble de paramètres suivant : adresse IP source, numéro de port source, adresse IP destination, et numéro de port destination. Une communication UDP à chemins multiples est, de manière générale, une communication associée à plusieurs ensembles de paramètres {adresse IP source, numéro de port source, adresse IP destination, numéro de port destination} ; la variation d'au moins l'un de ces quatre paramètres identifie un chemin différent (communication simple différente). Ainsi, une communication UDP à chemins multiples est composée de plusieurs communications UDP simples.

La **figure 3** représente, à titre d'exemple, un terminal T compatible avec les communications à chemins multiples, connecté, *via* une passerelle résidentielle CPE (initiales des mots anglais « *Customer Premises Equipment* »), trois réseaux d'accès N1, N2 et N3 (filaires ou sans-fil) et l'Internet, à un serveur S lui aussi compatible avec les communications à chemins multiples. Le terminal T utilise *m* adresses IP distinctes (notées IP@t*i*, où *i* = 1, ..., *m*), alors que le serveur S utilise une même adresse IP (notée IP@s1) mais *n* numéros de port distincts (notés p*j*, où *j* = 1, ... *n*).

Comme mentionné ci-dessus, selon la présente invention, un premier dispositif communicant insère, dans les paquets IP envoyés selon un mode de transport UDP à un second dispositif communicant, un identifiant de contexte appelé « Context_ID ». L'identifiant de contexte doit être unique pour chaque communication MPUDP établie entre deux dispositifs communicants. Un dispositif communicant peut cependant réutiliser un identifiant de contexte qui aurait été utilisé dans le cadre d'une communication précédente, mais désormais terminée, s'il n'y a pas de risque de collision avec l'identifiant de contexte d'une communication en cours. De plus, afin d'améliorer le niveau de sécurité des communications UDP à chemins multiples, il est préférable que l'identifiant de contexte soit généré aléatoirement.

On notera qu'un identifiant de contexte peut être choisi par le dispositif communicant récepteur, ou être le résultat de l'association d'un identifiant choisi par le dispositif communicant émetteur avec un autre identifiant choisi par le dispositif communicant récepteur ; ces variantes ne sont possibles que si une étape d'échange d'informations entre les deux dispositifs a été établie avant l'envoi effectif des datagrammes UDP *via* des chemins multiples. L'identifiant de contexte peut également être choisi par une autre entité, telle qu'un gestionnaire de réseau commandant le dispositif communicant émetteur, ou le dispositif communicant récepteur, ou les deux dispositifs.

On notera également que, si la communication est bidirectionnelle, des identifiants de contexte distincts peuvent être utilisés par chacun des deux dispositifs communicants.

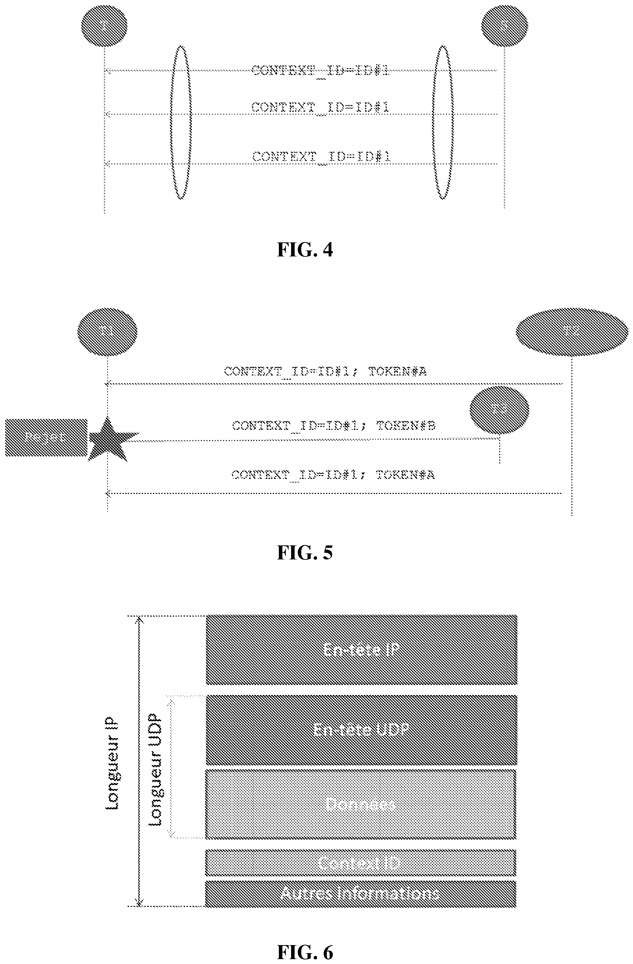

La **figure 4** illustre une communication MPUDP entre un terminal T et un serveur S. Dans cet exemple, les datagrammes UDP sont envoyés en utilisant trois communications UDP simples. Pour permettre au terminal T d'associer ces communications simples à une même session UDP à chemins multiples, le serveur S insère l'identifiant de contexte ID#1 dans les paquets qu'il envoie à T.

En plus de l'identifiant de contexte, des informations supplémentaires, telles qu'un jeton de sécurité, peuvent être avantageusement insérées dans les messages échangés entre les deux dispositifs communicants. La **figure 5** illustre une communication MPUDP entre un terminal T1 et un terminal T2 utilisant l'identifiant de contexte ID#1, et dans laquelle un terminal T3 essaye d'insérer des données (par exemple, en usurpant une adresse IP de T2). Si le jeton de sécurité « Authentication_Token » inclus par T3 n'est pas identique à celui utilisé par T2, alors T1 ne prend pas en compte les données transmises par T3.

L'identifiant de contexte ainsi que des données supplémentaires peuvent être insérées dans un paquet IP, et sont, selon une première variante, positionnées immédiatement après les données UDP. Comme illustré sur la **figure 6****,** la valeur « Longueur IP » indique la taille globale du paquet IP incluant celle de l'en-tête IP (20 octets en IPv4, 40 octets en IPv6), alors que la valeur « Longueur UDP » indique la taille totale de l'en-tête UDP et des données utiles (« *payload* » en anglais). En soustrayant la longueur de l'en-tête IP et la Longueur UDP de la Longueur IP, le récepteur du paquet IP peut déterminer la position de l'identifiant de contexte et des éventuelles données supplémentaires.

Selon une deuxième variante, l'identifiant de contexte est transporté dans le champ contenant les données utiles (« *payload* ») UDP.

Selon une troisième variante, on définit de nouvelles options IPv4 dédiées (auquel cas les données supplémentaires peuvent être commodément consignées dans le champ « Options » de l'en-tête d'un paquet IPv4), ou un en-tête d'extension IPv6 dédié. Ces options sont utilisées pour transporter l'identifiant de contexte ainsi que d'éventuelles données supplémentaires (par exemple, un jeton de sécurité).

Il importe évidemment que l'utilisation de communications UDP à chemins multiples n'induise pas de dégradation de la Qualité de Service (par exemple, une perte de paquets) par comparaison avec le mode UDP classique.

En particulier, une distorsion du niveau de qualité associé aux chemins multiples est de nature à remettre en cause l'intégrité de la communication en provoquant un décalage entre l'ordre d'émission et l'ordre d'arrivée des datagrammes UDP. Même si certaines applications UDP sont conçues pour minimiser un tel risque (qui est également avéré pour des communications simples), un dispositif communicant UDP émetteur peut avantageusement insérer dans les messages qu'il émet, en plus de l'identifiant de contexte Context_ID, une information supplémentaire permettant à un dispositif communicant UDP récepteur de traiter ces messages dans leur ordre d'émission. Cette information supplémentaire sera appelée « Order_Rank ». Cet élément d'information peut être par exemple structuré comme un entier non-nul dont la valeur est incrémentée ; ainsi, un datagramme UDP dont la valeur Order_Rank est égale à « 7 » est une indication que ce datagramme UDP est le septième d'une séquence.

Afin d'améliorer la sécurité des communications, la valeur Order_Rank initiale (c'est-à-dire, celle du premier paquet) peut être non-nulle et générée aléatoirement.

Un terminal compatible avec les communications UDP à chemins multiples doit, de préférence, disposer de mécanismes fiables lui permettant de s'assurer que le terminal distant est lui aussi compatible avec les communications à chemins multiples. Plusieurs méthodes peuvent être envisagées à cet effet, par exemple :
- utiliser la ressource DNS SRV (initiales des mots anglais « *Domain Name System Service Record* ») : cette approche ne s'applique que pour des applications impliquant un échange DNS ; elle ne s'applique pas aux applications (telles que les applications P2P) échangeant des informations de connectivité dites référentes (« *referrals* », en anglais) (une information référente peut être structurée par exemple comme un nom de domaine, une adresse IP, ou un numéro de port, cf. https://tools.ietf.org/html/draft-carpenter-behave-referral-object-00#section-4) ;
- utiliser un nouveau numéro de protocole pour identifier la version UDP à chemins multiples : cette approche peut être envisagée dans un environnement contrôlé, mais ne peut pas être déployée à grande échelle à cause de la prolifération de NAT (initiales des mots anglais « *Network Address Translater* » signifiant « Traducteur d'Adresse Réseau ») et de pare-feux ;
- définir des extensions applicatives (FTP, par exemple) : cette approche ne s'applique qu'à certains protocoles, et ne peut pas être généralisée ; ou
- définir une nouvelle application au-dessus d'UDP ; cette application sera dédiée en partie à la vérification du support de MPUDP par le terminal distant.

On va décrire à présent un mode de réalisation de l'invention, qui repose sur l'utilisation de concentrateurs de trafic compatibles avec les communications UDP à chemins multiples.

On rappelle à cet égard que, pour permettre aux terminaux, passerelles résidentielles (par exemple, passerelles domestiques ou d'entreprise), décodeurs TV et autres dispositifs-clients de bénéficier des communications à chemins multiples, les opérateurs réseau utilisent des dispositifs appelés « concentrateurs de trafic ». Un « concentrateur de trafic » (on utilisera occasionnellement simplement le terme de « concentrateur » par souci de concision) est une fonction réseau, physique ou virtuelle, permettant d'agréger les communications UDP exploitant les différents chemins susceptibles d'être utilisés par un dispositif pour établir une communication UDP avec un dispositif distant.

La fonction de concentrateur peut être hébergée dans un centre de traitement de données (« *data center* » en anglais) ou embarquée dans un équipement du réseau de transport. Un concentrateur peut être une fonction embarquée dans une passerelle résidentielle, cohabiter avec une fonction-relais (« *proxy* » en anglais) MPTCP ou SCTP (Stream Control Transmission Protocol) ou avec un point de terminaison de tunnel GRE (Generic Routing Encapsulation), ou encore être un point de terminaison de tunnels IP-in-IP ou de tunnels de niveau 2. Le cas échéant, l'agrégat de tous les chemins multiples par un concentrateur peut donner lieu à l'établissement d'un ou de plusieurs tunnels virtuels, par exemple pour faciliter les opérations de gestion (par isolation du trafic échangé sur les différents chemins ainsi agrégés, et amélioration du processus de détection de pannes) liées à l'établissement de cette communication.

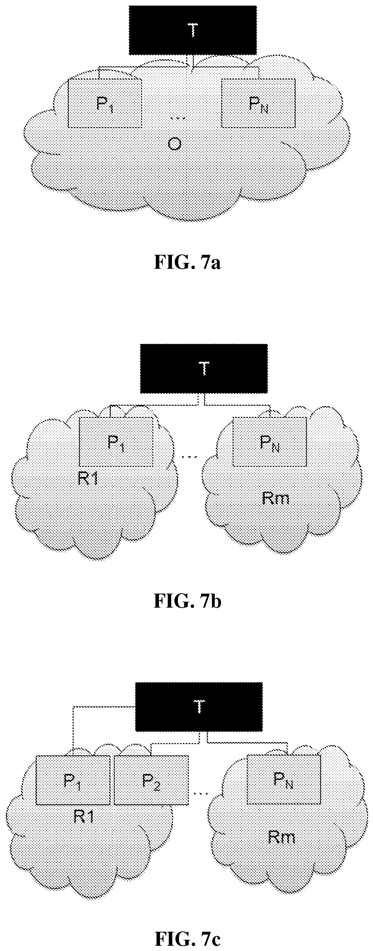

Les **figures 7a, 7b et 7c** illustrent, à titre d'exemples, divers types d'architectures associées à des concentrateurs de trafic.

Ces figures montrent un terminal T connecté à un ou plusieurs réseaux IP R1, ..., Rm ou O via *N* noeuds (*P*₁, *P*₂, ... , *P_{N}*) embarquant une fonction de concentrateur de trafic. Un tel noeud peut par exemple être une passerelle (domestique ou d'entreprise) ou un routeur IP. On voit sur les figures que :
- le terminal peut être connecté à un seul réseau O géré par un seul fournisseur de connectivité IP ayant déployé au moins un concentrateur de trafic (figure 7a), ou
- le terminal peut être connecté à m réseaux R1, ..., Rm qui tous hébergent au moins un concentrateur de trafic (figure 7b), ou encore
- le terminal peut être connecté à m réseaux R1, ..., Rm dont une partie héberge plusieurs concentrateurs de trafic (figure 7c).

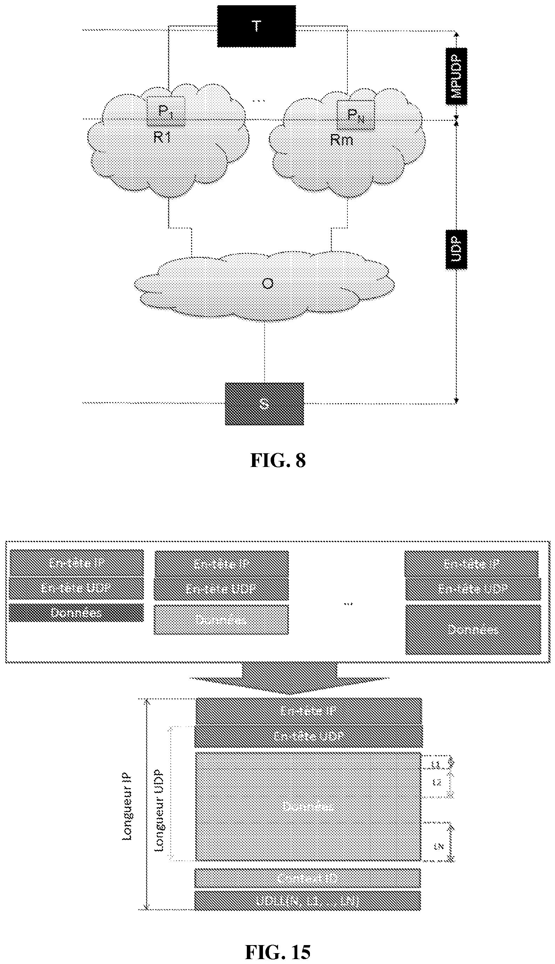

Or, avantageusement, l'intervention d'un concentrateur de trafic a notamment pour effet qu'une communication qui est vue par un dispositif local comme étant une communication à chemins multiples, peut être vue par un dispositif distant comme étant une communication simple, comme illustré sur la **figure 8****.**

Mais un fournisseur de connectivité IP peut tout aussi bien décider d'utiliser un concentrateur de trafic sur le ou les chemins sur lesquels une communication est établie, même si le dispositif distant est compatible avec les communications à chemins multiples. En effet, l'utilisation d'un concentrateur permet avantageusement de contrôler en permanence la qualité de la communication agrégée. Par ailleurs, la présence d'un concentrateur facilite l'activation de filtres requis pour des besoins d'interception légale, car l'intégralité du trafic passe par le concentrateur.

La mise en oeuvre dudit mode de réalisation requiert les étapes préliminaires suivantes, au cours desquelles un dispositif-client (tel qu'un terminal, ou une passerelle résidentielle) signale sa compatibilité avec MPUDP à un ou plusieurs concentrateurs.

Selon une première étape, ledit dispositif-client acquiert des informations (une ou plusieurs adresses IP, typiquement) qui lui permettront d'envoyer des datagrammes UDP vers un ou plusieurs concentrateurs. Cette opération peut se faire par configuration, ou de manière dynamique en utilisant un protocole tel que DHCP (ou tout autre protocole capable de véhiculer l'information caractéristique du, ou des concentrateurs vers le dispositif-client). Le dispositif-client dispose ainsi d'une ou plusieurs adresses IP de concentrateurs.

Selon une seconde étape, les informations descriptives des conditions d'attachement aux réseaux (ainsi que, le cas échéant, d'autres informations utiles) sont communiquées au concentrateur. Cette opération est nécessaire lors de toute altération des conditions d'attachement aux réseaux (par exemple, redémarrage du dispositif-client, attachement du dispositif-client à un nouveau réseau, perte d'attachement du dispositif-client à un réseau). On comprendra qu'il n'est pas nécessaire d'effectuer cette opération pour chaque nouvelle communication UDP à chemins multiples, mais en fonction des conditions d'attachement réseau.

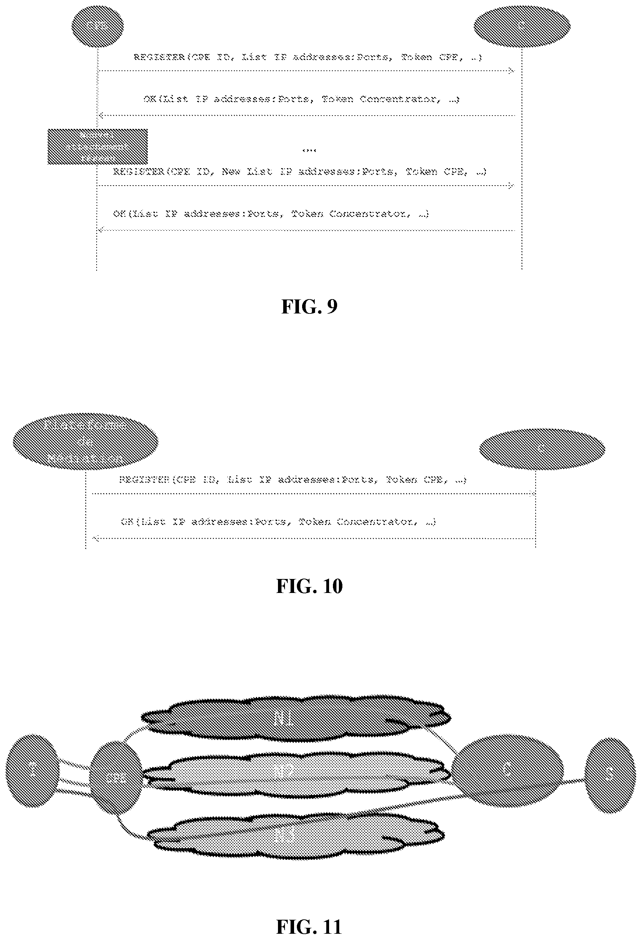

Selon une première variante, appelée mode « Enregistrement », et illustrée sur la **figure 9** dans le cas particulier où le dispositif-client est une passerelle résidentielle CPE, le dispositif-client fait parvenir au concentrateur un message REGISTER() incluant les différentes adresses, et éventuellement les différents numéros de ports, alloués au dispositif-client. Ce message REGISTER() peut par exemple être envoyé à une plateforme de médiation, qui se chargera d'informer le, ou les concentrateurs auxquels le dispositif-client est associé. Le dispositif-client peut éventuellement inclure des clés de sécurité dans le message REGISTER() pour éviter qu'un concentrateur malveillant ne s'insère dans une communication. Le dispositif-client peut aussi indiquer une durée de vie associée à au moins une adresse ou au moins un numéro de port parmi ceux qu'il communique au concentrateur. Le dispositif-client peut utiliser les baux DHCP pour renseigner la durée pendant laquelle une adresse IP peut être utilisée. Une durée de vie positionnée à « 0 » indique que cette adresse n'est plus valide et qu'elle ne doit plus être utilisée par le concentrateur pour des communications UDP à chemins multiples. La clé de sécurité est utilisée pour calculer un condensé (« *hash* » en anglais) permettant de déterminer si un datagramme est émis depuis un concentrateur légitime (c'est-à-dire, habilité à traiter le trafic UDP reçu, ou à destination, du dispositif-client).

Suite à la réception de ce message REGISTER(), le concentrateur répond au dispositif-client avec un message OK() si l'opération s'est déroulée avec succès, ou par un message ERROR(Code) dans le cas contraire. Ce message OK() doit inclure l'ensemble des adresses IP et/ou des numéros de port tels que maintenus par le concentrateur.

En cas de conflit entre les informations retournées par le concentrateur et celles maintenues localement par le dispositif-client, celui-ci peut entreprendre des actions pour supprimer des adresses non valides ou pour ajouter de nouvelles adresses. Cela se traduit par l'émission de nouveaux messages REGISTER() à destination du concentrateur. Le « Code » du message ERROR() indique la raison de l'échec de traitement de la requête REGISTER(). Le dispositif-client doit adapter son comportement au Code renvoyé par le concentrateur. Par exemple, il ne doit pas solliciter le concentrateur si le Code indique que le concentrateur ne dispose pas de ressources suffisantes pour traiter le trafic UDP émis par, ou à destination du dispositif-client, ou si le Code indique un refus d'autorisation.

Selon une deuxième variante, appelée mode « Médiation », et illustrée sur la **figure 10** dans le cas particulier où le dispositif-client est une passerelle résidentielle CPE, aucune action n'est requise de la part du dispositif-client. Le concentrateur est informé des dispositifs-client qui ont la capacité d'établir des communications UDP à chemins multiples, ainsi que des adresses et éventuellement des numéros de port associés, via une plateforme de médiation exploitée par le fournisseur de service. Typiquement, la plateforme de médiation s'appuie sur les baux d'attachements aux différents réseaux pour fournir les informations correspondantes à un ou plusieurs concentrateurs. Les mêmes primitives (REGISTER(), OK(), et ainsi de suite) que pour le mode « Enregistrement » peuvent être utilisées pour le mode « Médiation ».

Dans les exemples décrits ci-dessous dudit mode de réalisation de l'invention, on peut distinguer deux types de situations.

La première situation concerne les communications au cours desquelles un concentrateur de trafic reçoit un datagramme UDP acheminé selon le mode de transport UDP à chemins multiples, et transmet ensuite ce datagramme UDP à son destinataire selon le mode de transport UDP simple (classique). Dans ce cas, de manière générale, les informations relatives à la communication à chemins multiples (notamment l'identifiant de contexte Context_ID) sont retirées du datagramme UDP transmis vers le destinataire final. Toutefois, dans certaines conditions (par exemple, si l'identifiant de contexte Context_ID est codé de telle manière que sa présence dans les datagrammes UDP ne perturbe pas l'établissement d'une communication UDP simple), le concentrateur peut envoyer ce datagramme UDP à son destinataire sans retirer l'identifiant de contexte Context_ID ; le concentrateur peut appliquer cette procédure pour toutes les communications UDP, ou seulement pour une partie de ces communications.

La seconde situation concerne les communications au cours desquelles les datagrammes UDP reçus par un concentrateur de trafic selon le mode de transport UDP simple et associés à une certaine session sont répartis par le concentrateur entre les différents chemins d'une communication UDP à chemins multiples permettant d'atteindre le destinataire de ces datagrammes UDP. Cette répartition de trafic obéit alors à une logique préconfigurée ; par exemple, toutes les ressources associées à tous les chemins sont agrégées, ou bien le trafic est réparti selon des poids de distribution, ou bien encore seuls certains chemins sont utilisés ; lorsque le concentrateur reçoit un datagramme UDP, il consulte une table d'enregistrement qui liste l'ensemble des adresses et/ou numéros de port du destinataire du datagramme UDP reçu, identifie si plusieurs chemins sont disponibles pour cette session, alloue un identifiant de contexte Context_ID si aucun paquet n'a déjà été traité pour cette session ou réutilise un identifiant de contexte Context_ID déjà alloué pour cette session, et achemine ensuite le datagramme UDP vers l'adresse IP et/ou le numéro de port dudit destinataire associés au chemin choisi pour acheminer ce datagramme UDP.

Selon un premier exemple, illustré sur la **figure 11****,** un terminal T compatible avec MPUDP échange des messages avec un serveur S non compatible avec MPUDP, *via* un concentrateur C et trois réseaux N1, N2 et N3, ainsi que, optionnellement, via une passerelle résidentielle CPE.

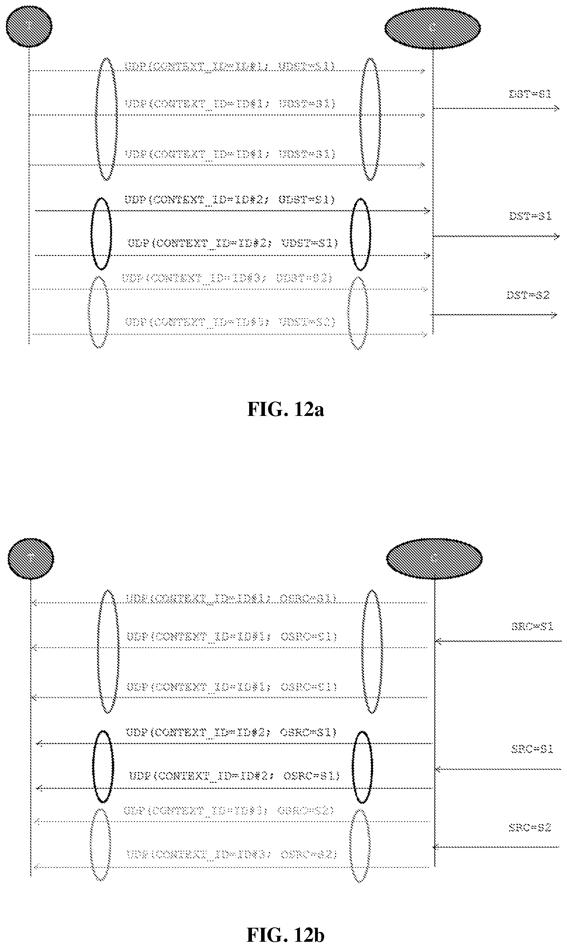

Selon un deuxième exemple, illustré sur la **figure 12a****,** un terminal T compatible avec MPUDP envoie des messages UDP à deux terminaux distants S1 et S2 non compatibles avec MPUDP *via* un concentrateur C, en répartissant le trafic UDP entre plusieurs chemins. Des identifiants de contextes différents sont alloués par le terminal T pour chacune des communications en cours (deux communications avec le même terminal S1, et une communication avec le terminal S2).

Selon un troisième exemple, illustré sur la **figure 12b****,** un terminal T compatible avec MPUDP reçoit des messages UDP de la part de deux terminaux distants S1 et S2 non-compatibles avec MPUDP *via* un concentrateur C, qui répartit le trafic UDP entre plusieurs chemins. Des identifiants de contextes différents sont alloués par le concentrateur C pour chacune des communications en cours (deux communications avec le même terminal S1, et une communication avec le terminal S2).

Les exemples suivants font intervenir une passerelle CPE et un concentrateur de trafic qui sont tous les deux compatibles avec MPUDP. De plus, la passerelle CPE abrite un terminal T qui peut être compatible, ou non-compatible, avec MPUDP ; c'est donc cette passerelle CPE qui est ici responsable de la gestion des communications UDP du terminal T ; avantageusement, aucune contrainte (par exemple, mise à jour logicielle) n'est imposée au terminal T dans ce mode de réalisation.

Dans ces exemples, les datagrammes UDP reçus par la passerelle CPE de la part du terminal T sont répartis entre les différents chemins multiples selon une logique de répartition de trafic préconfigurée ; par exemple, toutes les ressources associées à tous les chemins sont agrégées, ou le trafic est réparti selon des poids de distribution, ou encore seuls certains chemins sont utilisés.

Suite à la réception d'un datagramme UDP émis par le terminal T dans le cadre d'une certaine communication UDP, la passerelle CPE consulte une table d'enregistrement qui liste l'ensemble des adresses (et/ou numéros de port) du concentrateur, détermine si plusieurs chemins sont disponibles pour cette session, récupère une ou plusieurs adresses IP ou numéros de port, alloue un identifiant de contexte Context_ID si aucun paquet n'a déjà été traité pour cette session ou réutilise un identifiant de contexte déjà alloué pour cette session, et achemine ensuite le datagramme UDP vers l'adresse IP et le numéro de port du concentrateur C associés au chemin choisi pour acheminer ce datagramme UDP.

Dans le cas particulier où le terminal T est compatible avec MPUDP, il peut émettre des datagrammes UDP vers la passerelle CPE en utilisant une communication UDP à chemins multiples pour laquelle le terminal T a choisi un certain identifiant de contexte « ID#1 ». Si la passerelle CPE utilise déjà cet identifiant de contexte ID#1 pour une autre communication MPUDP impliquant le concentrateur C (et par exemple un autre terminal de son réseau privé), la passerelle CPE affecte un autre identifiant de contexte « ID#2 » aux datagrammes UDP reçus du terminal T et transmis au concentrateur C, et garde en mémoire la correspondance entre les identifiants de contexte ID#1 et ID#2 en relation avec le terminal T.

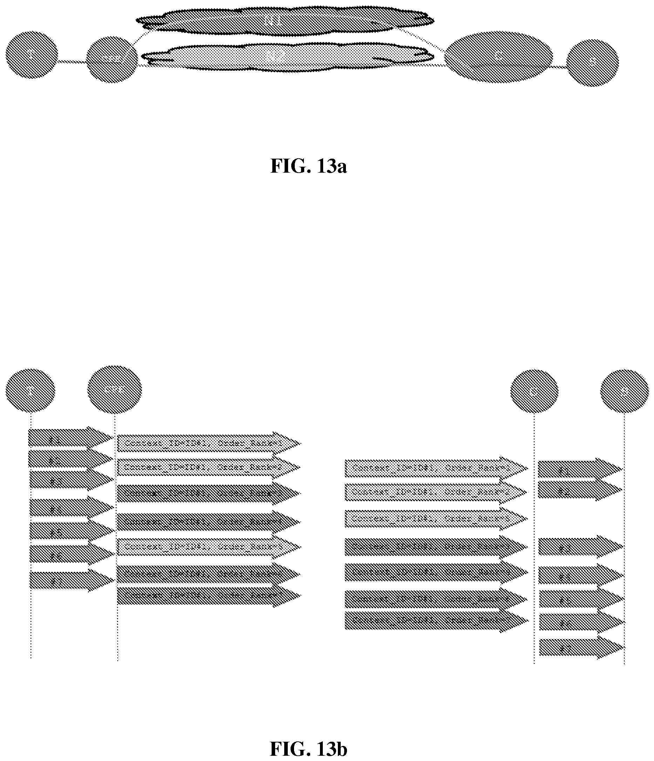

Selon donc un quatrième exemple dudit mode de réalisation, illustré sur les **figures 13a et 13b****,** un terminal T émet des datagrammes UDP à destination d'un serveur S non compatible avec MPUDP, *via* une passerelle résidentielle CPE, deux réseaux N1 et N2, et un concentrateur C.

Dans cet exemple, la passerelle résidentielle CPE insère l'information Order_Rank décrite ci-dessus (en plus de l'identifiant de contexte Context_ID). Supposons par exemple que les datagrammes « 1 », « 2 » et « 5 » sont envoyés par la passerelle résidentielle CPE via le premier chemin, alors que les datagrammes « 3 », « 4 », « 6 » et « 7 » sont envoyés via le second chemin. Suite à la réception de ces différents paquets par le concentrateur de trafic C, ce dernier utilise l'information Order_Rank pour décider si un datagramme est à relayer immédiatement vers le serveur S, ou s'il doit attendre l'arrivée d'autres datagrammes avant de le transmettre. Afin d'éviter que la fonction de ré-ordonnancement n'induise un délai important, on peut prévoir que le concentrateur transmette les paquets mis en attente après l'écoulement d'une durée REORDER_MAX. Par exemple, si l'ordre d'arrivée des paquets via les deux chemins est {« 1 », « 2 », « 5 », « 3 », « 4 », « 6 », « 7 »}, le concentrateur de trafic C doit d'abord traiter les paquets « 1 » et « 2 » ; le paquet dont la valeur de l'information « Order_Rank » est égale à « 5 » est mis en attente jusqu'à réception des paquets « 3 » et « 4 » ; une fois ces paquets reçus, le concentrateur transmet le datagramme « 5 ». En supposant que les paquets « 3 » et « 4 » ne sont pas reçus dans un délai REORDER_MAX, le paquet « 5 » est alors relayé vers sa destination sans attendre les paquets manquants.

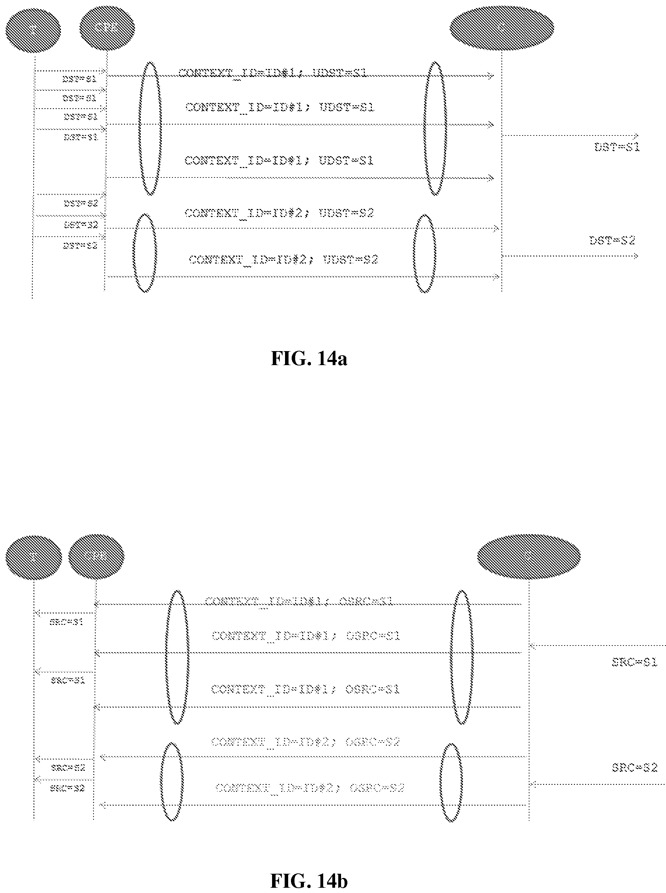

Selon un cinquième exemple, illustré sur les **figures 14a et 14b****,** un terminal T placé derrière une passerelle résidentielle CPE compatible avec MPUDP échange des datagrammes UDP avec deux terminaux S1 et S2 non compatibles avec MPUDP, *via* une passerelle résidentielle CPE et un concentrateur C.

Sur la figure 14a, la passerelle CPE répartit le trafic UDP reçu du terminal T et destiné à des terminaux distants S1 et S2 entre deux chemins permettant d'atteindre le concentrateur C. Des identifiants de contexte Context_ID différents sont alloués par la passerelle CPE pour chacune des communications en cours.

Sur la figure 14b, le concentrateur C intercepte le trafic UDP émis par des terminaux S1 et S2 à destination du terminal T, et répartit ce trafic entre deux chemins permettant d'atteindre la passerelle CPE. Dans ce cas, le concentrateur C « transforme » chaque session UDP simple en une session UDP à chemins multiples. Des identifiants de contexte Context_ID différents sont alloués par le concentrateur C pour chacune des communications en cours. Enfin, la passerelle CPE, suite à la réception d'un datagramme UDP acheminé sur un chemin utilisé par la communication à chemins multiples, l'envoie vers le terminal T selon le mode de transport UDP (simple) classique : de manière générale (voir exceptions ci-dessus), les informations concernant les chemins multiples sont alors retirées de ce datagramme, notamment l'identifiant de contexte Context_ID.

Afin d'éviter de recourir à des tunnels, et pour une meilleure optimisation des ressources réseau disponibles, des informations supplémentaires seront de préférence transportées dans un datagramme UDP au sein d'une communication UDP établie *via* des chemins multiples. Ces informations (cf. figures 12a, 12b, 14a et 14b) comprennent notamment :
- une information « Origin Source » (ORSC) : cette information contient l'adresse IP ou le numéro de port source tels que renseignés par la source du trafic UDP ;
- une information « Ultimate Destination » (UDST) : cette information contient l'adresse IP ou le numéro de port de destination tels que renseignés par la source du trafic UDP.

Un concentrateur de trafic UDP peut utiliser ces informations ORSC et UDST de la manière suivante.
∘ Suite à l'interception d'un datagramme UDP destiné à une passerelle CPE, le concentrateur copie l'adresse source du paquet (ou numéro de port source) dans une instance ORSC, insère cette instance ORSC dans le datagramme UDP, et remplace l'adresse source par l'une des adresses du concentrateur. Le concentrateur peut éventuellement réécrire le numéro de port source. Le concentrateur active au moins un mécanisme de répartition de trafic entre plusieurs chemins. Par exemple, afin d'améliorer les performances de la transmission des datagrammes UDP, le concentrateur peut décider d'agréger les données véhiculées par un ou plusieurs datagrammes UDP dans un seul datagramme UDP, qui sera acheminé vers la passerelle CPE dans le contexte d'une session UDP à chemin multiples. Le datagramme UDP ainsi construit est ensuite transmis vers l'une des adresses de la passerelle CPE. On notera que l'ordre d'exécution des étapes ci-dessus n'est fourni qu'à titre d'illustration, et qu'en outre ces étapes ne sont pas exhaustives.
∘ Suite à la réception d'un datagramme UDP en provenance d'une passerelle CPE, le concentrateur remplace l'adresse de destination par l'adresse (ou le numéro de port) tels que renseignés dans l'instance UDST ; ensuite, le concentrateur retire les informations UDST ainsi que l'identifiant de contexte Context_ID du paquet. Le concentrateur peut réécrire l'adresse source ou le numéro de port source du paquet. Le datagramme UDP ainsi construit est ensuite transmis vers le prochain saut IP.

Une passerelle résidentielle CPE peut utiliser les informations ORSC et UDST de la manière suivante.
∘ Suite à l'interception d'un datagramme UDP destiné à un concentrateur, la passerelle CPE copie l'adresse de destination du paquet (ou le numéro de port de destination) dans une instance UDST, insère cette instance UDST dans le datagramme UDP, et remplace l'adresse de destination par l'une des adresses du concentrateur. La passerelle CPE peut éventuellement réécrire le numéro de port de destination. La passerelle CPE active au moins un mécanisme de répartition de trafic entre plusieurs chemins. Par exemple, afin d'améliorer les performances de la transmission des datagrammes UDP, la passerelle CPE peut décider d'agréger les données véhiculées par un ou plusieurs datagrammes UDP dans un seul datagramme UDP qui sera acheminé vers le concentrateur dans le contexte d'une communication UDP à chemins multiples. Le datagramme UDP ainsi construit est ensuite transmis au concentrateur.
∘ Suite à la réception d'un datagramme UDP en provenance d'un concentrateur, la passerelle CPE remplace l'adresse source par l'adresse (ou le numéro de port) tels que renseignés dans l'instance OSRC, puis retire les informations ORSC et l'identifiant de contexte véhiculés dans le datagramme UDP reçu. Le datagramme UDP ainsi construit est ensuite transmis vers le prochain saut IP.

Selon un mode de réalisation particulier de l'invention, un datagramme UDP reçu dans le cadre d'une communication MPUDP peut être transformé par un dispositif communicant compatible avec MPUDP, tel qu'un concentrateur ou une passerelle CPE, en un ou plusieurs datagrammes UDP « classiques », c'est-à-dire des datagrammes UDP caractéristiques d'une communication UDP établie sur un seul chemin. Les données transportées par plusieurs (N) datagrammes UDP classiques d'une même communication peuvent être incluses par un concentrateur ou une passerelle CPE dans un même paquet, ou dans des paquets différents via des chemins multiples.

En particulier, si un même datagramme UDP est utilisé pour transmettre des données reçues au sein de plusieurs datagrammes UDP classiques, le concentrateur ou la passerelle CPE doit, en plus des opérations déjà mentionnées précédemment, inclure un objet UDLL (UDP Datagram Length List) dans le datagramme UDP ainsi construit, comme illustré sur la **figure** 15. L'objet UDLL est structuré comme suit : {Count, L₁, ..., L_{count}}. Le champ « Count » indique le nombre de datagrammes UDP « classiques » dont les données sont incluses dans un même datagramme UDP ainsi construit. Le champ Lᵢ {i=1, count} indique la longueur de chaque segment de données correspondant à un datagramme UDP classique dont le contenu est inclus dans le datagramme UDP ainsi construit ; cette longueur n'intègre pas l'en-tête UDP de 8 octets, mais identifie seulement les données utiles transportées dans un datagramme UDP classique. A titre d'exemple, si le concentrateur ou la passerelle CPE décide d'agréger dans un même datagramme UDP les données contenues dans trois datagrammes UDP classiques et dont les tailles UDP respectives (c'est-à-dire, sans l'en-tête UDP) sont L1, L2 et L3, le concentrateur ou la passerelle CPE insérera un objet UDLL{3, L1, L2, L3} dans le datagramme UDP émis.

Suite à la réception d'un datagramme UDP contenant un objet UDLL, le concentrateur ou la passerelle CPE transforme ce message en un nombre « Count » de datagrammes UDP classiques, de taille UDP
8 + Lᵢ, où {i=1, ..., Count} en intégrant l'en-tête UDP de 8 octets. A titre d'exemple, si le concentrateur ou la passerelle CPE reçoit un datagramme UDP avec un objet UDLL{3, L1, L2, L3}, le concentrateur ou la passerelle CPE transforme ce paquet reçu en trois datagrammes UDP classiques ; la taille UDP du premier datagramme UDP est « L1+8 », celle du deuxième est « L2+8 », et celle du troisième est « L3+8 ».

L'invention peut être mise en oeuvre au sein de noeuds de réseaux de communication, par exemple des dispositifs-client, des passerelles résidentielles ou des concentrateurs de trafic, au moyen de composants logiciels et/ou matériels. Lesdits composants logiciels pourront être intégrés à un programme d'ordinateur classique de gestion de noeud de réseau. C'est pourquoi, comme indiqué ci-dessus, la présente invention concerne également un système informatique. Ce système informatique comporte de manière classique une unité centrale de traitement commandant par des signaux une mémoire, ainsi qu'une unité d'entrée et une unité de sortie. De plus, ce système informatique peut être utilisé pour exécuter un programme d'ordinateur comportant des instructions pour la mise en oeuvre de l'un quelconque des procédés de communication selon l'invention.

En effet, l'invention vise aussi un programme d'ordinateur tel que décrit succinctement ci-dessus. Ce programme d'ordinateur peut être stocké sur un support lisible par un ordinateur et peut être exécutable par un microprocesseur. Ce programme peut utiliser n'importe quel langage de programmation, et se présenter sous la forme de code source, code objet, ou de code intermédiaire entre code source et code objet, tel que dans une forme partiellement compilée, ou dans n'importe quelle autre forme souhaitable.

L'invention vise aussi un support d'informations inamovible, ou partiellement ou totalement amovible, comportant des instructions d'un programme d'ordinateur tel que décrit succinctement ci-dessus.

Ce support d'informations peut être n'importe quelle entité ou dispositif capable de stocker le programme. Par exemple, le support d'informations peut comprendre un moyen de stockage, tel qu'une ROM, par exemple un CD ROM ou une ROM de circuit microélectronique, ou un moyen d'enregistrement magnétique, tel qu'un disque dur, ou encore une clé USB (« *USB flash drive* » en anglais).

D'autre part, le support d'informations peut être un support transmissible tel qu'un signal électrique ou optique, qui peut être acheminé via un câble électrique ou optique, par radio ou par d'autres moyens. Le programme d'ordinateur selon l'invention peut être en particulier téléchargé sur un réseau tel que l'Internet.

En variante, le support d'informations peut être un circuit intégré dans lequel le programme est incorporé, le circuit étant adapté pour exécuter ou pour être utilisé dans l'exécution de l'un quelconque des procédés de communication selon l'invention.

## Revendications

1. Procédé de communication dans un réseau IP, comprenant les étapes suivantes :
a) un premier dispositif communicant initialise une communication avec un second dispositif communicant, en signalant audit second dispositif communicant que ledit premier dispositif communicant est compatible avec les communications à chemins multiples reposant sur le protocole de transport UDP, User Datagram Protocol, une communication UDP à chemins multiples établie entre les premier et deuxième dispositifs communicants étant composée de plusieurs communications UDP simples et susceptible d'emprunter simultanément plusieurs chemins distincts entre ces deux dispositifs communicants, et
b) si le second dispositif communicant est lui aussi compatible avec les communications UDP à chemins multiples :
- le premier dispositif communicant envoie des données utiles au second dispositif selon le protocole de transport UDP, en incluant dans les datagrammes UDP contenant ces données utiles, quel que soit le chemin utilisé, un même identifiant, dit identifiant de contexte (Context_ID), permettant au second dispositif communicant de corréler l'ensemble desdits datagrammes UDP associés à une même communication UDP à chemins multiples ayant emprunté des chemins distincts, et/ou
- le second dispositif communicant envoie des données utiles au premier dispositif selon le protocole de transport UDP, en incluant dans les datagrammes UDP contenant ces données utiles, quel que soit le chemin utilisé, un même identifiant, dit identifiant de contexte (Context_ID), permettant au premier dispositif communicant de corréler l'ensemble desdits datagrammes UDP associés à une même communication UDP à chemins multiples et ayant emprunté des chemins distincts.

2. Procédé de communication selon la revendication 1, **caractérisé en ce que** ledit premier dispositif communicant et/ou ledit second dispositif communicant insère en outre dans lesdits datagrammes UDP un jeton de sécurité (Authentication_Token) permettant au récepteur de ces datagrammes UDP d'en authentifier l'émetteur.

3. Procédé de communication selon la revendication 1 ou la revendication 2, **caractérisé en ce que** ledit premier dispositif communicant et/ou ledit second dispositif communicant insère en outre dans lesdits datagrammes UDP une information (Order_Rank) permettant au récepteur de ces messages de les traiter dans leur ordre d'émission.

4. Procédé de communication selon l'une quelconque des revendications 1 à 3, **caractérisé en ce que**, ledit premier dispositif communicant et/ou ledit second dispositif communicant étant un concentrateur de trafic, ledit procédé comprend en outre les étapes suivantes :
- ledit concentrateur de trafic reçoit un datagramme UDP acheminé sur un chemin utilisé par une communication UDP à chemins multiples, et
- le concentrateur de trafic envoie ce datagramme UDP à son destinataire selon le mode de transport UDP simple.

5. Procédé de communication selon l'une quelconque des revendications 1 à 4, **caractérisé en ce que**, ledit premier dispositif communicant et/ou ledit second dispositif communicant étant un concentrateur de trafic apte à répartir les datagrammes UDP reçus selon le mode de transport UDP simple et associés à une certaine session, entre différents chemins d'une communication UDP à chemins multiples permettant d'atteindre le destinataire de ces datagrammes UDP, ledit procédé comprend en outre les étapes suivantes :
- suite à la réception d'un datagramme UDP, le concentrateur de trafic consulte une table d'enregistrement qui liste l'ensemble des adresses et/ou numéros de port du destinataire du datagramme UDP reçu,
- le concentrateur de trafic alloue un identifiant de contexte (Context ID) si aucun paquet n'a déjà été traité pour cette session ou réutilise un identifiant de contexte (Context ID) déjà alloué pour cette session, et
- le concentrateur de trafic achemine le datagramme UDP vers l'adresse IP et/ou le numéro de port dudit destinataire associés au chemin choisi pour acheminer ce datagramme UDP.

6. Dispositif communicant, dit premier dispositif communicant, **caractérisé en ce qu'**il comprend des moyens pour :
- initialiser une communication avec un autre dispositif communicant, dit second dispositif communicant, au sein d'un réseau IP, en signalant audit second dispositif communicant que ledit premier dispositif communicant est compatible avec les communications UDP, User Datagram Protocol, à chemins multiples, une communication UDP à chemins multiples établie entre les premier et deuxième dispositifs communicants étant composée de plusieurs communications UDP simples et susceptible d'emprunter simultanément plusieurs chemins distincts entre ces deux dispositifs communicants,
- envoyer des données utiles selon le protocole UDP au second dispositif communicant, en incluant dans les datagrammes UDP contenant ces données utiles, quel que soit le chemin utilisé, un même identifiant, dit identifiant de contexte (Context_ID), permettant au second dispositif communicant de corréler l'ensemble desdits datagrammes UDP associés à une même communication UDP à chemins multiples et ayant emprunté des chemins distincts, et
- recevoir des données utiles selon le protocole UDP de la part du second dispositif communicant, en détectant dans les datagrammes UDP contenant ces données utiles, quel que soit le chemin utilisé, un même identifiant, dit identifiant de contexte (Context_ID), permettant au premier dispositif communicant de corréler l'ensemble des datagrammes UDP associés à une même communication UDP à chemins multiples ayant emprunté des chemins distincts.

7. Dispositif communicant selon la revendication 6, **caractérisé en ce qu'**il comprend en outre des moyens pour insérer dans les datagrammes UDP qu'il émet un jeton de sécurité (Authentication_Token) permettant au récepteur de ces messages d'en authentifier l'émetteur.

8. Dispositif communicant selon la revendication 6 ou la revendication 7, **caractérisé en ce qu'**il comprend en outre des moyens pour insérer dans les datagrammes UDP qu'il émet une information (Order_Rank) permettant au récepteur de ces messages de les traiter dans leur ordre d'émission.

9. Dispositif communicant selon l'une quelconque des revendications 6 à 8, **caractérisé en ce qu'**il comprend un concentrateur de trafic ayant des moyens pour, lorsqu'il reçoit un datagramme UDP acheminé sur un chemin utilisé par une communication UDP à chemins multiples, envoyer ce datagramme UDP à son destinataire selon le mode de transport UDP simple.

10. Dispositif communicant selon l'une quelconque des revendications 6 à 9, **caractérisé en ce qu'**il comprend un concentrateur de trafic ayant des moyens pour répartir des datagrammes UDP reçus selon le mode de transport UDP simple et associés à une certaine session, entre différents chemins d'une communication UDP à chemins multiples permettant d'atteindre le destinataire de ces datagrammes UDP, ainsi que des moyens pour, suite à la réception d'un datagramme UDP :
- consulter une table d'enregistrement qui liste l'ensemble des adresses et/ou numéros de port du destinataire du datagramme UDP reçu,
- allouer un identifiant de contexte (Context ID) si aucun datagramme UDP n'a déjà été traité pour cette session ou réutiliser un identifiant de contexte (Context ID) déjà alloué pour cette session, et
- acheminer le datagramme UDP vers l'adresse IP et/ou le numéro de port dudit destinataire associés au chemin choisi pour acheminer ce datagramme UDP.

11. Dispositif communicant selon l'une quelconque des revendications 6 à 10, **caractérisé en ce qu'**il comprend un dispositif-client (T), une passerelle domestique ou d'entreprise (CPE), ou un concentrateur de trafic (C).

12. Moyen de stockage de données inamovible, ou partiellement ou totalement amovible, comportant des instructions de code de programme informatique pour l'exécution des étapes d'un procédé de communication selon l'une quelconque des revendications 1 à 5.

13. Programme d'ordinateur téléchargeable depuis un réseau de communications et/ou stocké sur un support lisible par ordinateur et/ou exécutable par un microprocesseur, **caractérisé en ce qu'**il comprend des instructions pour l'exécution des étapes d'un procédé de communication selon l'une quelconque des revendications 1 à 5, lorsqu'il est exécuté sur un ordinateur.

## Patentansprüche

1. Kommunikationsverfahren in einem IP-Netzwerk, umfassend die folgenden Schritte:
a) eine erste kommunizierende Vorrichtung initialisiert eine Kommunikation mit einer zweiten kommunizierenden Vorrichtung, wobei sie der zweiten kommunizierenden Vorrichtung signalisiert, dass die erste kommunizierende Vorrichtung mit den auf dem Transportprotokoll UDP, User Datagram Protocol, beruhenden UDP-Mehrwegkommunikationen kompatibel ist, wobei eine zwischen den ersten und zweiten kommunizierenden Vorrichtungen aufgebaute UDP-Mehrwegkommunikation aus mehreren einfachen UDP-Kommunikationen zusammengesetzt ist und geeignet ist, gleichzeitig mehrere verschiedene Wege zwischen diesen beiden kommunizierenden Vorrichtungen zu benutzen, und
b) wenn die zweite kommunizierende Vorrichtung ebenfalls kompatibel mit den UDP-Mehrwegkommunikationen ist:
- sendet die erste kommunizierende Vorrichtung Nutzdaten an die zweite Vorrichtung gemäß dem Transportprotokoll UDP, wobei sie in die UDP-Datagramme, die diese Nutzdaten enthalten, unabhängig von dem verwendeten Weg eine selbe Kennung, Kontextkennung (Context_ID) genannt, aufnimmt, die es der zweiten kommunizierenden Vorrichtung ermöglicht, die Gesamtheit der UDP-Datagramme, die einer selben UDP-Mehrwegkommunikation zugeordnet sind und verschiedene Wege benutzt haben, zu korrelieren, und/oder
- sendet die zweite kommunizierende Vorrichtung Nutzdaten an die erste Vorrichtung gemäß dem Transportprotokoll UDP, wobei sie in die UDP-Datagramme, die diese Nutzdaten enthalten, unabhängig von dem verwendeten Weg eine selbe Kennung, Kontextkennung (Context_ID) genannt, aufnimmt, die es der ersten kommunizierenden Vorrichtung ermöglicht, die Gesamtheit der UDP-Datagramme, die einer selben UDP-Mehrwegkommunikation zugeordnet sind und verschiedene Wege benutzt haben, zu korrelieren.

2. Kommunikationsverfahren nach Anspruch 1, **dadurch gekennzeichnet, dass** die erste kommunizierende Vorrichtung und/oder die zweite kommunizierende Vorrichtung in die UDP-Datagramme ferner ein Sicherheitstoken (Authentication_Token) einfügt, das es dem Empfänger dieser UDP-Datagramme ermöglicht, deren Sender zu authentifizieren.

3. Kommunikationsverfahren nach Anspruch 1 oder Anspruch 2, **dadurch gekennzeichnet, dass** die erste kommunizierende Vorrichtung und/oder die zweite kommunizierende Vorrichtung in die UDP-Datagramme ferner eine Information (Order_Rank) einfügt, die es dem Empfänger dieser Nachrichten ermöglicht, sie in ihrer Sendereihenfolge zu verarbeiten.

4. Kommunikationsverfahren nach einem der Ansprüche 1 bis 3, **dadurch gekennzeichnet, dass**, wenn die erste kommunizierende Vorrichtung und/oder die zweite kommunizierende Vorrichtung ein Verkehrskonzentrator ist, das Verfahren ferner die folgenden Schritte umfasst:
- der Verkehrskonzentrator empfängt ein UDP-Datagramm, das auf einem Weg befördert wird, der von einer UDP-Mehrwegkommunikation verwendet wird, und
- der Verkehrskonzentrator sendet dieses UDP-Datagramm an seinen Empfänger gemäß dem einfachen UDP-Transportmodus.

5. Kommunikationsverfahren nach einem der Ansprüche 1 bis 4, **dadurch gekennzeichnet, dass**, wenn die erste kommunizierende Vorrichtung und/oder die zweite kommunizierende Vorrichtung ein Verkehrskonzentrator ist, der geeignet ist, die gemäß dem einfachen UDP-Transportmodus empfangenen und einer bestimmten Sitzung zugeordneten UDP-Datagramme zwischen verschiedenen Wegen einer UDP-Mehrwegkommunikation zu verteilen, die es ermöglichen, den Empfänger dieser UDP-Datagramme zu erreichen, das Verfahren ferner die folgenden Schritte umfasst:
- nach dem Empfangen eines UDP-Datagramms fragt der Verkehrskonzentrator eine Datensatztabelle ab, die die Gesamtheit der Adressen und/oder Portnummern des Empfängers des empfangenen UDP-Datagramms auflistet,
- der Verkehrskonzentrator weist eine Kontextkennung (Context_ID) zu, wenn kein Paket bereits für diese Sitzung verarbeitet worden ist, oder verwendet eine für diese Sitzung bereits zugewiesene Kontextkennung (Context_ID) erneut und
- der Verkehrskonzentrator befördert das UDP-Datagramm zu der IP-Adresse und/oder Portnummer des Empfängers, die dem zum Befördern dieses UDP-Datagramms gewählten Weg zugeordnet sind.

6. Kommunizierende Vorrichtung, erste kommunizierende Vorrichtung genannt, **dadurch gekennzeichnet, dass** sie Mittel umfasst, um:
- eine Kommunikation mit einer anderen kommunizierenden Vorrichtung, zweite kommunizierende Vorrichtung genannt, in einem IP-Netzwerk zu initialisieren, wobei sie der zweiten kommunizierenden Vorrichtung signalisiert, dass die erste kommunizierende Vorrichtung mit Mehrwegkommunikationen gemäß UDP, User Datagram Protocol, kompatibel ist, wobei eine zwischen den ersten und zweiten kommunizierenden Vorrichtungen aufgebaute UDP-Mehrwegkommunikation aus mehreren einfachen UDP-Kommunikationen zusammengesetzt ist und geeignet ist, gleichzeitig mehrere verschiedene Wege zwischen diesen beiden kommunizierenden Vorrichtungen zu benutzen,
- Nutzdaten gemäß dem Protokoll UDP an die zweite kommunizierende Vorrichtung zu senden, wobei sie in die UDP-Datagramme, die diese Nutzdaten enthalten, unabhängig von dem verwendeten Weg eine selbe Kennung, Kontextkennung (Context _ID) genannt, aufnimmt, die es der zweiten kommunizierenden Vorrichtung ermöglicht, die Gesamtheit der UDP-Datagramme, die einer selben UDP-Mehrwegkommunikation zugeordnet sind und verschiedene Wege benutzt haben, zu korrelieren, und
- Nutzdaten gemäß dem Protokoll UDP von der zweiten kommunizierenden Vorrichtung zu empfangen, wobei sie in den UDP-Datagrammen, die diese Nutzdaten enthalten, unabhängig von dem verwendeten Weg eine selbe Kennung, Kontextkennung (Context _ID) genannt, detektiert, die es der ersten kommunizierenden Vorrichtung ermöglicht, die Gesamtheit der UDP-Datagramme, die einer selben UDP-Mehrwegkommunikation zugeordnet sind und verschiedene Wege benutzt haben, zu korrelieren.

7. Kommunizierende Vorrichtung nach Anspruch 6, **dadurch gekennzeichnet, dass** sie ferner Mittel umfasst, um in die UDP-Datagramme, die sie sendet, ein Sicherheitstoken (Authentication_Token) einzufügen, das es dem Empfänger dieser Nachrichten ermöglicht, deren Sender zu authentifizieren.

8. Kommunizierende Vorrichtung nach Anspruch 6 oder Anspruch 7, **dadurch gekennzeichnet, dass** sie ferner Mittel umfasst, um in die UDP-Datagramme, die sie sendet, eine Information (Order_Rank) einzufügen, die es dem Empfänger dieser Nachrichten ermöglicht, sie in ihrer Sendereihenfolge zu verarbeiten.

9. Kommunizierende Vorrichtung nach einem der Ansprüche 6 bis 8, **dadurch gekennzeichnet, dass** sie einen Verkehrskonzentrator umfasst, der Mittel besitzt, um, wenn er ein UDP-Datagramm empfängt, das auf einem Weg befördert wird, der von einer UDP-Mehrwegkommunikation verwendet wird, dieses UDP-Datagramm gemäß dem einfachen UDP-Transportmodus an seinen Empfänger zu senden.

10. Kommunizierende Vorrichtung nach einem der Ansprüche 6 bis 9, **dadurch gekennzeichnet, dass** sie einen Verkehrskonzentrator umfasst, der Mittel besitzt, um UDP-Datagramme, die gemäß dem einfachen UDP-Transportmodus empfangen werden und einer bestimmten Sitzung zugeordnet sind, zwischen verschiedenen Wegen einer UDP-Mehrwegkommunikation zu verteilen, die es ermöglichen, den Empfänger dieser UDP-Datagramme zu erreichen, sowie Mittel, um, nach dem Empfangen eines UDP-Datagramms:
- eine Datensatztabelle abzufragen, die die Gesamtheit der Adressen und/oder Portnummern des Empfängers des empfangenen UDP-Datagramms auflistet,
- eine Kontextkennung (Context _ID) zuzuweisen, wenn für diese Sitzung kein UDP-Datagramm bereits verarbeitet worden ist, oder eine für diese Sitzung bereits zugewiesene Kontextkennung (Context_ID) erneut zu verwenden und
- das UDP-Datagramm zu der IP-Adresse und/oder Portnummer des Empfängers zu befördern, die dem zum Befördern dieses UDP-Datagramms gewählten Weg zugeordnet sind.

11. Kommunizierende Vorrichtung nach einem der Ansprüche 6 bis 10, **dadurch gekennzeichnet, dass** sie eine Client-Vorrichtung (T), ein Heimnetz- oder Unternehmensnetzgateway (CPE) oder einen Verkehrskonzentrator (C) umfasst.

12. Nicht entnehmbares oder teilweise oder vollständig entnehmbares Datenspeichermedium, das Computerprogrammcodeanweisungen zum Ausführen der Schritte eines Kommunikationsverfahrens nach einem der Ansprüche 1 bis 5 beinhaltet.

13. Computerprogramm, das über ein Kommunikationsnetz herunterladbar ist und/oder auf einem computerlesbaren Medium gespeichert ist und/oder von einem Mikroprozessor ausführbar ist, **dadurch gekennzeichnet, dass** es Anweisungen umfasst, die bei seiner Ausführung auf einem Computer die Schritte eines Kommunikationsverfahrens nach einem der Ansprüche 1 bis 5 ausführen.

## Claims

1. Method for communicating in an IP network, comprising the following steps:
a) a first communicating device initializes a communication with a second communicating device, while signalling to said second communicating device that said first communicating device is compatible with multi-path communications relying on the UDP (User Datagram Protocol) transport protocol, a multi-path UDP communication established between the first and second communicating devices being composed of several simple UDP communications and being likely to follow several distinct paths between these two communicating devices simultaneously, and
b) if the second communicating device is itself also compatible with multi-path UDP communications:
- the first communicating device sends payload data to the second device using the UDP transport protocol, by including, in the UDP datagrams containing these payload data regardless of the path that is used, one and the same identifier, called context identifier (Context _ID), allowing the second communicating device to correlate all of said UDP datagrams associated with one and the same multi-path UDP communication having followed distinct paths, and/or
- the second communicating device sends payload data to the first device using the UDP transport protocol, by including, in the UDP datagrams containing these payload data regardless of the path that is used, one and the same identifier, called context identifier (Context _ID), allowing the first communicating device to correlate all of said UDP datagrams associated with one and the same multi-path UDP communication having followed distinct paths.

2. Communication method according to Claim 1, **characterized in that** said first communicating device and/or said second communicating device furthermore inserts, into said UDP datagrams, a security token (Authentication _Token) allowing the receiver of these UDP datagrams to authenticate the sender thereof.

3. Communication method according to Claim 1 or Claim 2, **characterized in that** said first communicating device and/or said second communicating device furthermore inserts, into said UDP datagrams, an item of information (Order_Rank) allowing the receiver of these messages to process them in the order in which they were sent.

4. Communication method according to any one of Claims 1 to 3, **characterized in that**, said first communicating device and/or said second communicating device being a traffic hub, said method furthermore comprises the following steps:
- said traffic hub receives a UDP datagram conveyed on a path used by a multi-path UDP communication, and
- the traffic hub sends this UDP datagram to its recipient according to the simple UDP transport mode.

5. Communication method according to any one of Claims 1 to 4, **characterized in that**, said first communicating device and/or said second communicating device being a traffic hub able to distribute the UDP datagrams, received according to the simple UDP transport mode and associated with a certain session, between various paths of a multi-path UDP communication making it possible to reach the recipient of these UDP datagrams, said method furthermore comprises the following steps:
- subsequent to the receipt of a UDP datagram, the traffic hub consults a registration table which lists the set of addresses and/or port numbers of the recipient of the received UDP datagram,
- the traffic hub allocates a context identifier (Context_ID) if no packet has already been processed for this session or reuses a context identifier (Context_ID) already allocated for this session, and
- the traffic hub conveys the UDP datagram to said recipient's IP address and/or port number which are associated with the path chosen to convey this UDP datagram.

6. Communicating device, called first communicating device, **characterized in that** it comprises means for:
- initializing a communication with another communicating device, called second communicating device, within an IP network, while signalling to said second communicating device that said first communicating device is compatible with multi-path UDP (User Datagram Protocol) communications, a multi-path UDP communication established between the first and second communicating devices being composed of several simple UDP communications and being likely to follow several distinct paths between these two communicating devices simultaneously,
- sending payload data to the second communicating device using the UDP protocol, by including, in the UDP datagrams containing these payload data regardless of the path that is used, one and the same identifier, called context identifier (Context_ID), allowing the second communicating device to correlate all of said UDP datagrams associated with one and the same multi-path UDP communication having followed distinct paths, and
- receiving payload data from the second communicating device using the UDP protocol, by detecting, in the UDP datagrams containing these payload data regardless of the path that is used, one and the same identifier, called context identifier (Context_ID), allowing the first communicating device to correlate all of the UDP datagrams associated with one and the same multi-path UDP communication having followed distinct paths.

7. Communicating device according to Claim 6, **characterized in that** it furthermore comprises means for inserting, into the UDP datagrams that it sends, a security token (Authentication_Token) allowing the receiver of these messages to authenticate the sender thereof.

8. Communicating device according to Claim 6 or Claim 7, **characterized in that** it furthermore comprises means for inserting, into the UDP datagrams that it sends, an item of information (Order _Rank) allowing the receiver of these messages to process them in the order in which they were sent.

9. Communicating device according to any one of Claims 6 to 8, **characterized in that** it comprises a traffic hub having means for, when it receives a UDP datagram conveyed on a path used by a multi-path UDP communication, sending this UDP datagram to its recipient according to the simple UDP transport mode.

10. Communicating device according to any one of Claims 6 to 9, **characterized in that** it comprises a traffic hub having means for distributing UDP datagrams, received according to the simple UDP transport mode and associated with a certain session, between various paths of a multi-path UDP communication making it possible to reach the recipient of these UDP datagrams, as well as means for, subsequent to the receipt of a UDP datagram:
- consulting a registration table which lists the set of addresses and/or port numbers of the recipient of the received UDP datagram,
- allocating a context identifier (Context _ID) if no UDP datagram has already been processed for this session or reusing a context identifier (Context_ID) already allocated for this session, and
- conveying the UDP datagram to said recipient's IP address and/or port number which are associated with the path chosen to convey this UDP datagram.

11. Communicating device according to any one of Claims 6 to 10, **characterized in that** it comprises a client device (T), a domestic or company gateway (CPE), or a traffic hub (C).

12. Fixed or partly or fully removable data storage means including computer program code instructions for executing the steps of a communication method according to any one of Claims 1 to 5.

13. Computer program downloadable from a communications network and/or stored on a computer-readable medium and/or able to be executed by a microprocessor, **characterized in that** it comprises instructions for executing the steps of a communication method according to any one of Claims 1 to 5 when it is executed on a computer.
